Europäisches Patentamt

European Patent Office

Office européen des brevets

(19)

(11) **EP 1 031 829 A1**

(12) **DEMANDE DE BREVET EUROPEEN**

(43) Date de publication:
**30.08.2000 Bulletin 2000/35**

(51) Int Cl.$^7$: **G01N 25/54**

(21) Numéro de dépôt: **00400330.7**

(22) Date de dépôt: **07.02.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **25.02.1999 FR 9902374**

(71) Demandeur: **Oldham France S.A.**
**62000 Arras Cedex (FR)**

(72) Inventeurs:
• **Miric, Tomislav**
**92000 Nanterre (FR)**

• **Karpov, Evgenij**
**14004 Ljuberci, Moskovskaja (RU)**
• **Basovski, Boris**
**Moscou (RU)**
• **Dikolenko, Evgenij**
**Moscou (RU)**
• **Petrov, Aleksandar**
**Moscou (RU)**

(74) Mandataire: **Moncheny, Michel et al**
**c/o Cabinet Lavoix**
**2 Place d'Estienne d'Orves**
**75441 Paris Cedex 09 (FR)**

(54) **Procédé d'analyse d'un mélange gazeux pour la détermination de son explosibilité et dispositif pour la mise en oeuvre d'un tel procédé**

(57) Selon ce procédé d'analyse d'un mélange gazeux contenant au moins un gaz inflammable, pour la détermination de son explosibilité, on alimente un élément résistif chauffant (15) disposé dans une enceinte d'analyse (12) en communication avec le mélange gazeux à analyser, de manière à brûler le mélange dans l'enceinte, on mesure un signal électrique (S) aux bornes de l'élément résistif au cours de la combustion et l'on détermine l'explosibilité du mélange gazeux à partir d'une comparaison entre des mesures dudit signal effectuées au cours d'une phase transitoire de décroissance de la concentration du gaz inflammable dans le mélange gazeux. Les mesures effectuées au cours de la phase transitoire sont effectuées à des instants choisis de manière à obtenir, pour différents gaz inflammables, des signaux de mesures sensiblement identiques pour des concentrations correspondant à des explosibilités identiques.

FIG.1

EP 1 031 829 A1

**Description**

La présente invention est relative à un procédé d'analyse d'un mélange gazeux contenant un ou plusieurs gaz inflammables, pour la détermination de l'explosibilité du mélange.

Elle se rapporte également à un dispositif d'analyse pour la mise en oeuvre d'un tel procédé.

Une application particulièrement intéressante de ces procédé et dispositif est la détermination du danger d'explosion d'un mélange de gaz et vapeurs inflammables, pour des installations de production susceptibles de dégager des gaz inflammables, notamment dans le domaine de l'industrie chimique, pétrolière, minière ou gazière.

On connaît, à ce jour, différentes techniques permettant de déterminer le risque d'explosion d'un mélange gazeux, notamment par chromatographie, par spectrométrie de masse, par ionisation de flammes, ainsi que les techniques d'analyse optique du mélange.

L'une des techniques les plus répandues en raison de sa simplicité de mise en oeuvre consiste à utiliser deux éléments thermochimiques montés dans un pont de Wheatstone, l'un étant actif et l'autre ayant subi un traitement de surface approprié pour le rendre incapable de brûler le mélange gazeux.

Les éléments thermochimiques sont alimentés en énergie électrique de manière à les chauffer jusqu'à la température de combustion catalytique du ou de chaque gaz inflammable.

Comme on le conçoit, la chaleur de l'élément thermochimique dépend, d'une part, de la chaleur dégagée lors de la combustion catalytique et, d'autre part, du courant d'alimentation.

Ainsi, par comparaison entre les signaux de mesure issus du pont de Wheatstone, il est possible de déterminer la chaleur dégagée au cours de la combustion, laquelle dépend de la concentration de chaque gaz inflammable, de sa puissance calorifique et de son coefficient de diffusion, et de déterminer l'explosibilité du mélange gazeux. L'explosibilité est généralement fournie sous la forme d'un pourcentage de la limite inférieure d'explosibilité (LIE).

Ce type de technique présente un certain nombre d'inconvénients majeurs, notamment en raison du fait qu'elle engendre des erreurs, d'une part additives, engendrées par une dérive dans le temps du circuit en pont de Wheatstone et, d'autre part, multiplicatives dues, principalement, aux différences des coefficients de diffusion des gaz inflammables et aux différences de puissance calorifique de ces gaz.

Ces erreurs engendrent des divergences dans les courbes de réponse des différents gaz, c'est à dire une variation, pour des compositions différentes des mélanges, du signal de mesure d'explosibilité, cette variation pouvant s'élever jusqu'à environ 80%.

En outre, l'utilisation de deux éléments thermochimiques, qu'il est nécessaire d'alimenter en énergie électrique, tend à limiter considérablement l'autonomie des appareils de mesure, lorsqu'ils sont agencés sous la forme d'appareils portables.

On a tenté de pallier ces inconvénients en n'utilisant qu'un seul élément thermochimique et en déterminant l'explosibilité du mélange gazeux à partir d'une comparaison entre deux signaux de mesure effectuées lors d'une phase transitoire de la combustion au cours de laquelle la concentration du ou de chaque gaz inflammable décroît dans le mélange gazeux.

Cette technique permet de limiter considérablement la consommation de l'appareil de mesure et d'éliminer les erreurs additives.

Elle ne permet toutefois pas d'éliminer les erreurs multiplicatives.

Le but de l'invention est de pallier ces inconvénients.

Elle a donc pour objet un procédé d'analyse d'un mélange gazeux contenant au moins un gaz inflammable, pour la détermination de son explosibilité, comprenant les étapes consistant à :

- alimenter un élément résistif chauffant disposé dans une enceinte d'analyse en communication avec le mélange gazeux à analyser, de manière à brûler le mélange gazeux dans l'enceinte ;
- mesurer un signal électrique aux bornes de l'élément résistif au cours de la combustion ; et
- déterminer l'explosibilité du mélange gazeux à partir d'une comparaison entre les valeurs du signal mesurées au cours d'une phase transitoire de décroissance de la concentration du gaz inflammable dans le mélange gazeux,

caractérisé en ce que lesdites mesures effectuées au cours de la phase transitoire sont effectuées à des instants choisis de manière à obtenir, pour différents gaz inflammables, des signaux de mesure sensiblement identiques pour des concentrations correspondant à des explosibilités identiques.

Le procédé d'analyse conforme à l'invention peut en outre comporter une ou plusieurs des caractéristiques suivantes :

- l'enceinte d'analyse est dotée d'un orifice d'admission du mélange gazeux, l'orifice étant calibré de manière à assurer, au cours de la phase transitoire, une diffusion d'une quantité de gaz vers l'enceinte inférieure à la quantité de gaz brûlé dans cette dernière ;
- les mesures sont effectuées à des instants correspondant à des valeurs du signal de mesure comprises entre environ 80% et 40% de la valeur maximale du signal électrique aux bornes de l'élément résistif ;
- le mélange gazeux comportant plusieurs gaz inflammables ayant des régimes de combustion différents, on procède à un cycle d'analyse dudit mélange pour chaque gaz inflammable, par alimentation de l'élément résistif de manière à le chauffer à la température de combustion du gaz, mesure du signal électrique et détermination de l'explosibilité du mélange gazeux, et l'on additionne le résultat fourni à l'issue de chaque cycle d'analyse ;

- l'enceinte d'analyse est mise en communication avec le mélange gazeux à analyser par l'intermédiaire d'un cloison poreuse.

L'invention a également pour objet un dispositif d'analyse d'un mélange gazeux contenant au moins un gaz inflammable, en vue de la détermination de son explosibilité, pour la mise en oeuvre d'un procédé tel que défini ci-dessus, caractérisé en ce qu'il comporte une enceinte d'analyse en communication avec le mélange gazeux à analyser et dotée d'un élément résistif chauffant disposé dans le volume interne de l'enceinte, et une unité centrale d'analyse comprenant des moyens d'alimentation de l'élément résistif chauffant de manière à le chauffer jusqu'à la température de combustion du ou de chaque gaz inflammable, et des moyens de calcul de l'explosibilité du mélange gazeux comprenant des moyens de mesure d'un signal électrique aux bornes de l'élément chauffant et des moyens de comparaison entre des valeurs du signal électrique aux bornes de ce dernier, et en ce que l'unité centrale d'analyse comporte des moyens de contrôle du fonctionnement des moyens de mesure de manière à effectuer lesdites mesures au cours d'une phase transitoire de décroissance de la concentration du ou de chaque gaz inflammable dans le mélange gazeux, à des instants choisis de manière à obtenir, pour différents gaz inflammables, des signaux de mesure sensiblement identiques pour des concentrations correspondant à des explosibilités identiques.

Avantageusement l'enceinte d'analyse est dotée d'un orifice d'admission du mélange gazeux, l'orifice étant calibré de manière à assurer, au cours de la phase transitoire, une diffusion d'une quantité de gaz vers l'enceinte inférieure à la quantité de gaz brûlé dans cette dernière.

De préférence, l'enceinte d'analyse comporte une chambre de combustion dans laquelle est disposé l'élément résistif chauffant et une chambre de détente en communication avec le mélange gazeux à analyser par l'intermédiaire d'une cloison poreuse, une paroi de séparation dotée dudit orifice calibré s'étendant entre la chambre de combustion et la chambre de détente.

D'autres caractéristiques et avantages ressortiront de la description suivante, donnée uniquement à titre d'exemple, et faite en référence aux dessins annexés sur lesquels :

- la figure 1 est une vue schématique illustrant la constitution d'un dispositif d'analyse conforme à l'invention ;
- la figure 2 montre une courbe illustrant la variation, en fonction du temps, du signal de mesure aux bornes de l'élément résistif chauffant ;
- la figure 3 montre une courbe illustrant les instants de mesure du signal aux bornes de l'élément résistif permettant d'obtenir des signaux identiques pour des gaz inflammables différents à des concentrations correspondant à des explosibilités identiques ; et
- la figure 4 est une courbe illustrant un exemple de variation, en fonction du temps, de signaux de mesure pour des gaz ayant des régimes de combustion très différents.

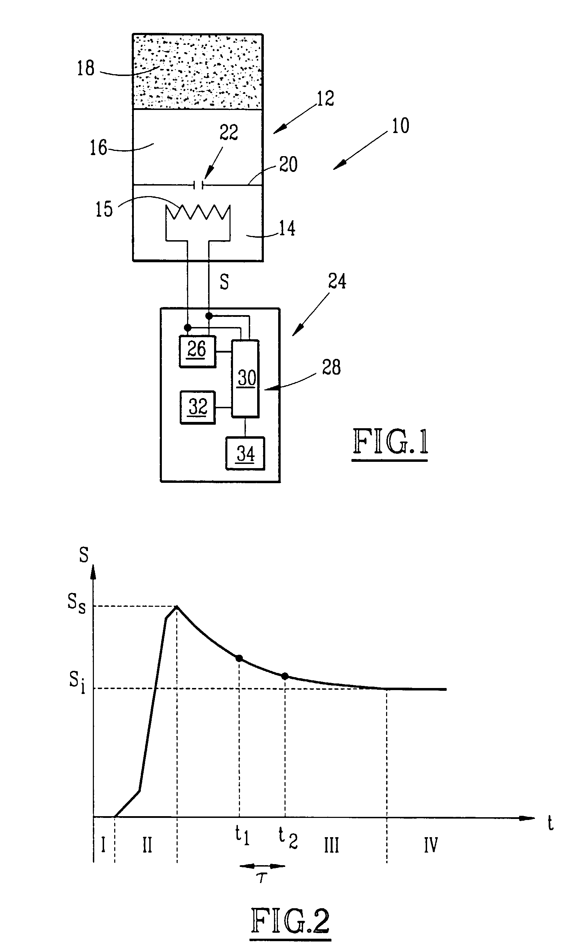

Sur la figure 1, on a représenté un dispositif d'analyse d'un mélange gazeux, désigné par la référence numérique générale 10.

Il est destiné à déterminer l'explosibilité d'un mélange gazeux contenu dans une enceinte d'analyse 12, en fournissant un résultat sous la forme d'un pourcentage de la limite inférieure d'explosibilité, ou d'explosivité, (LIE) du mélange gazeux.

L'enceinte 12 comporte une chambre 14 de combustion dans laquelle est placé un élément résistif chauffant, constitué par un filament réalisé en un matériau thermochimique, et une chambre de détente 16 en communication avec l'atmosphère à analyser par l'intermédiaire d'une paroi poreuse 18 autorisant une pénétration, avec une faible résistance, du mélange gazeux à analyser vers la chambre de détente 16.

Une paroi 20 munie d'un orifice calibré 22 est placée entre la chambre de combustion 14 et la chambre de détente 16.

Les dimensions du trou calibré 22 sont choisies pour que la diffusion du gaz, de la chambre de dilatation 16 vers la chambre de combustion 14, se fasse par diffusion libre des molécules de gaz et dépende uniquement des coefficients de diffusion de gaz et du gradient de sa concentration.

De même, les dimensions de la chambre de détente sont choisies pour atténuer efficacement les turbulences de l'extérieur susceptibles de troubler l'écoulement du mélange gazeux vers la chambre de combustion 14.

La combustion du mélange gazeux dans la chambre de combustion 14 s'effectue selon deux étapes distinctes, à savoir une étape transitoire au cours de laquelle le flux de gaz à travers l'orifice calibré 22 est insuffisant pour compenser la chute de concentration en gaz inflammable due à sa combustion, de sorte que la concentration du gaz inflammable dans le mélange gazeux chute de façon sensiblement exponentielle, et une étape correspondant à un régime permanent au cours de laquelle la concentration en gaz inflammable reste sensiblement constante.

Le filament 15 est raccordé à une unité centrale d'analyse 24 comprenant une source 26 d'alimentation du filament 15 en énergie électrique et des moyens de détermination de l'explosibilité du mélange comprenant des moyens de mesure 28 du signal électrique présent aux bornes du filament 15, et en particulier de sa tension.

Les moyens de mesure 28 comportent une unité centrale de traitement 30 constituée par un micro-controleur associé à des moyens de mémorisation 32 dans lesquels sont stockés un algorithme de gestion du fonctionnement du dispositif 10 et un ensemble de données obtenues par étalonnage préalable et correspondant à une variation, en fonction du temps, du signal électrique aux bornes du filament 15, pour chaque type de mélange gazeux susceptible d'être analysé par le dispositif, et à une horloge 34 assurant, conjointement avec l'unité centrale de traitement 30, le prélèvement de signaux aux bornes de l'élément résistif 15, à des instants de mesure prédéterminés.

Sous le contrôle de l'unité centrale de traitement 30, la source d'alimentation 26 alimente le filament 15 de manière à le chauffer jusqu'à la température de combustion du ou de chaque gaz inflammable entrant dans la constitution du mélange gazeux à analyser.

En référence à la figure 2, après la mise sous tension du filament 15, le signal S aux bornes du filament 15 reste à une valeur nulle pendant une courte durée correspondant au temps de réaction du dispositif (phase I). Dès la combustion du mélange gazeux, le signal de sortie S, qui est proportionnel à la température du filament 15 s'élève rapidement jusqu'à une valeur maximale Ss (phase II).

Lors de la phase III suivante, le flux de gaz à travers l'orifice calibré 22 est insuffisant pour compenser la chute de concentration en gaz inflammable, de sorte que le signal S, qui est dépendant de cette concentration, chute de façon sensiblement exponentielle jusqu'à une valeur Si correspondant à une valeur d'équilibre.

Dans la phase IV suivante, qui correspond à une phase d'équilibre entre la quantité de gaz inflammable brûlé et la quantité de gaz inflammable entrant à travers l'orifice calibré 22, le signal S reste constant.

On notera que le signal S illustré sur la figure 2 correspond à la somme de signaux élémentaires engendrés par chaque gaz inflammable entrant dans la constitution du mélange gazeux à analyser, ces signaux élémentaires variant de façon indépendante des signaux engendrés par les autres gaz inflammables.

Pour la détermination de l'explosibilité du mélange gazeux, on utilise le changement de concentration intervenant lors de la phase III mentionnée précédemment.

Au cours de cette phase, le changement de concentration peut être interprété en utilisant une modélisation par analogie avec un système dynamique soumis à deux forces, à savoir une force d'inertie $F_i$ et une force d'amortissement $F_a$ représentées respectivement par les relations suivantes :

$$F_i = - K \, d^2C/dt^2 \qquad (1)$$

$$F_a = - b \, dC/dt \qquad (2)$$

dans lesquelles K et b représentent respectivement les constantes d'inertie et d'amortissement du système dynamique, et C représente la concentration en gaz inflammable dans la chambre de combustion.

Ce système à deux forces répond à l'équation différentielle suivante :

$$d^2C/dt^2 + \delta \, dC/dt = 0 \qquad (3)$$

dans laquelle :

$\delta = b/K$, représente le facteur d'amortissement du système.

La solution à l'équation différentielle (3) suit une courbe exponentielle de base e, variable en fonction du temps et satisfait la relation suivante :

$$C = Cs \, [r + (1 - r)e^{-t/T}] \qquad (4)$$

dans laquelle :

$r = Ci/Cs$, correspond au coefficient de réduction de la concentration en gaz inflammable dans la chambre de combustion,

$T = 1/\delta$, désigne la constante de temps du système, et

Ci et Cs correspondent respectivement à la concentration en gaz inflammable présent dans la chambre de combustion aux points d'équilibre Si et au point correspondant au signal maximum Ss.

On notera que pour de faibles concentrations en gaz inflammable, la valeur du signal S aux bornes du filament chauffant 15 est proportionnelle à la concentration de ce gaz et satisfait donc à la relation suivante :

$$S = k \times C \qquad (5)$$

dans laquelle k désigne le coefficient de réponse ou de sensibilité du dispositif.

Ainsi, en utilisant l'analogie mentionnée précédemment, la variation du signal de mesure S en fonction du temps, au cours de la phase III, s'écrit selon la relation suivante :

$$S = k \, Cs \, [r + (1 - r)e^{-t/T}] \qquad (6)$$

dans laquelle les coefficients k, r et T sont les valeurs propres de chaque gaz inflammable, pour le dispositif d'analyse illustré sur la figure 1.

Comme cela a été mentionné précédemment, la valeur du signal S varie en fonction de la température de l'élément chauffant 15 et comprend ainsi, d'une part, une composante utile dépendante du ou des gaz inflammables du mélange gazeux, en particulier leur concentration et, d'autre part, une composante parasite due à la valeur du courant électrique l'alimentant, la température extérieure, l'humidité de l'air, la pression, ...

Afin d'éliminer la composante parasite, l'unité centrale de traitement 30 effectue une comparaison entre deux points différents prélevés à des instants de mesure $t_1$ et $t_2$ et élabore le signal L suivant :

$$L (t1, t2) = S(t1) - S(t2) \qquad (7)$$

D'après la relation (6), le signal unitaire $\bar{L} = \dfrac{L}{C_o}$ satisfait à la relation suivante:

$$\bar{L} = k (1- \Delta C/Co) (1-r) (1-e^{-\tau/T})e^{-t1/T} \qquad (8)$$

dans laquelle :

$\tau$ représente la différence entre les instants $t_2$ et $t_1$, $\Delta C$ représente la chute de concentration au cours de la phase II, et
Co représente la concentration du ou de chaque gaz inflammable dans l'air.

Comme mentionné précédemment, en présence de plusieurs gaz inflammables de différentes natures dans le mélange gazeux emplissant la chambre de combustion 14, chaque gaz inflammable fournit un signal S élémentaire, le signal total étant constitué par la somme de tous les signaux élémentaires.

Pour l'obtention de résultats fiables, l'unité centrale de traitement 30 et les moyens de synchronisation 34 effectuent des mesures dans la phase III à des instants $t_1$ et $t_2$ déterminés de manière à obtenir, pour chacun de ces gaz inflammables, des signaux S sensiblement identiques pour des concentrations correspondant à des explosibilités identiques.

Cette condition , établissant que des mêmes concentrations de deux gaz m et i, exprimées en pourcentage de leur limite inférieure d'explosibilité LIE, donnent les mêmes signaux peut être exprimée par la relation suivante :

$$\bar{L} \text{ m x (LIE)m} = \bar{L} \text{ i x (LIE)i} \qquad (9)$$

Ainsi, en utilisant la relation (8) mentionnée précédemment, cette relation devient :

$$\alpha i \times e^{(Ti-Tm)^{t_2}/TiTm} = \frac{e^{\tau/Tm} - 1}{e^{\tau/Ti} - 1} \qquad (10)$$

dans laquelle :

$$\alpha \text{ i} = \alpha \text{ exp. x } \alpha \text{ sens. x } \alpha \text{ reduc. x } \alpha \text{infl.}$$

avec :
$\alpha$ exp. = (LIE)i/(LIE)m ; $\alpha$ sens. = ki/km ; $\alpha$ reduc. = (1-r)i/(1-r)m ;
$\alpha$ infl. = [1-$\Delta$C/Co]i/[1-$\Delta$C/Co]m.

Ainsi, à titre d'exemple, pour un mélange de méthane et de propane, dans de l'air, on obtient la relation suivante, pour une enceinte donnée :

$$0,92e^{+0,230t_2} = \frac{e^\tau - 1}{e^{0,720\tau} - 1} \qquad (11)$$

Au contraire, pour un mélange à analyser contenant du méthane et de l'hexane, dans de l'air, la relation 10 devient :

$$0,64e^{0,375t_2} = \frac{e^\tau - 1}{e^{0,625\tau} - 1} \qquad (12)$$

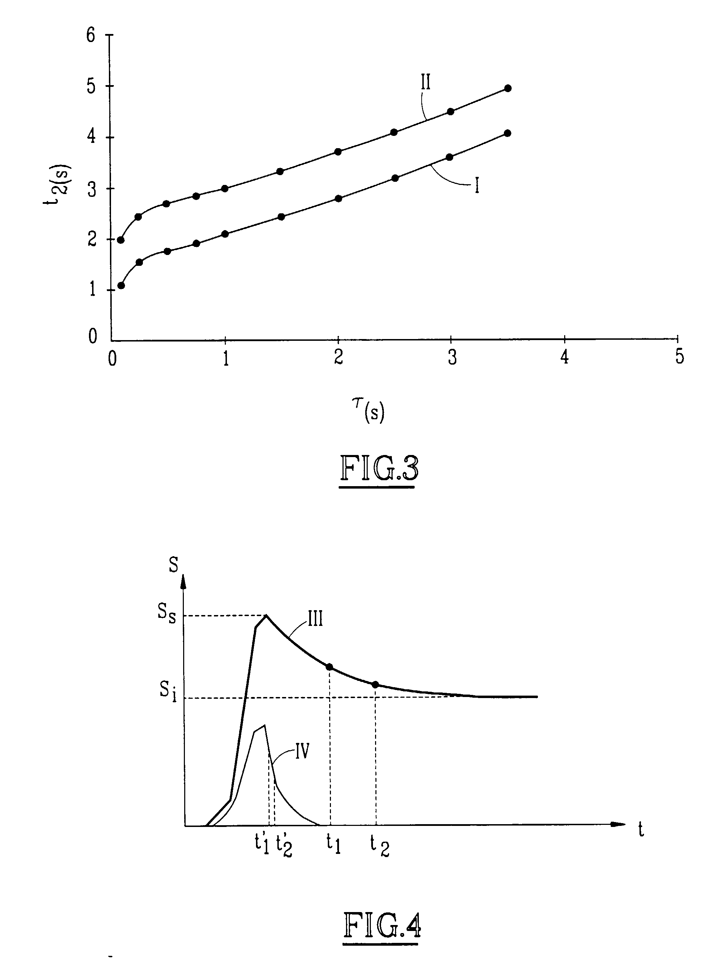

On a représenté sur la figure 3 la variation du deuxième instant de mesure $t_2$ en fonction de la différence $\tau$ entre les instants de mesure $t_2$ et $t_1$ satisfaisant aux relations (11) et (12) mentionnées précédemment, respectivement (courbes I et II).

Ainsi, en choisissant des instants de mesure satisfaisant à la relation (10), les signaux de mesure élémentaires délivrés à l'unité d'analyse 24 sont sensiblement identiques pour des gaz inflammables différents, ayant des concentrations correspondant à des explosibilités identiques.

On notera que, de préférence, les instants de mesure $t_1$ et $t_2$ se situent sensiblement à des instants correspondant à des valeurs du signal de mesure comprises entre environ 80% et 40% de la valeur maximale Ss du signal électrique aux bornes du filament 15. Les instants de mesure peuvent être affinés pour une enceinte donnée et en fonction du type de mélange, par l'optimisation exposée par les relations (9) et (10) mentionnées ci-dessus et présentée, pour trois gaz, par la figure 3.

Dans la description qui vient d'être faite, on a considéré que le mélange gazeux est constitué de plusieurs gaz inflammables ayant des températures de combustion relativement proches.

Dans le cas où l'un des gaz inflammables présente un régime ou une température de combustion très différente à celle des autres gaz, l'analyse du mélange gazeux s'effectue en procédant à un cycle d'analyse spécifique pour ce gaz. C'est notamment le cas de l'hydrogène.

Sur la figure 4, on a représenté deux courbes, III et IV montrant respectivement la variation, en fonction du temps, du signal S de mesure, pour un mélange gazeux contenant des hydrocarbures, et pour un mélange gazeux contenant de l'hydrogène. Pour l'analyse d'un mélange de ces gaz, on chauffe tout d'abord le filament 15 à une première température, voisine de 200°C, de manière à brûler uniquement l'hydrogène sur le filament 15, et on détermine l'explosibilité du mélange gazeux, en ce qui concerne l'hydrogène, comme mentionné précédemment, à partir de deux mesures effectuées à des instants $t'_1$ et $t'_2$.

On élève ensuite la température de l'élément chauffant 15 jusqu'à une température correspondant à la température de combustion des autres gaz inflammables, et on détermine l'explosibilité du mélange gazeux, pour ce qui concerne ces autres gaz, en procédant comme mentionné précédemment, à partir de deux mesures effectuées à des instants $t_1$ et $t_2$.

L'explosibilité du mélange gazeux peut ainsi être obtenue en ajoutant le résultat fourni à l'issue de chaque cycle d'analyse.

De préférence, pour des applications pratiques, l'analyse d'un mélange gazeux s'effectue de façon cyclique en alimentant le filament 15 jusqu'à ce que l'on atteigne le niveau Si pour l'un des gaz dont la constante de temps T est la plus grande puis on coupe le courant d'alimentation. On attend alors que la chambre de combustion 14 s'emplisse de gaz jusqu'au point d'égalisation des concentrations entre l'intérieur et l'extérieur de la chambre de combustion puis on alimente à nouveau le filament 15 de manière à effectuer un deuxième cycle de mesure.

En adaptant les paramètres de fonctionnement du dispositif, ainsi que l'inertie thermique du filament 15, il est possible d'obtenir une durée de cycle totale de quelques secondes, ce qui est satisfaisant pour la majorité des applications dans le domaine l'explosimétrie.

On conçoit que l'invention qui vient d'être décrite, qui utilise des signaux de mesure de la tension aux bornes d'un seul filament chauffé pour déterminer le risque d'explosion d'un gaz, présente une consommation la rendant particulièrement adaptée pour constituer un appareil portable.

En outre, les erreurs de mesure peuvent être considérablement réduites en choisissant de façon appropriée les instants de mesure de la tension aux bornes du filament pour que les résultats fournis soient identiques pour chaque gaz inflammable du mélange analysé, pour des concentrations de ces gaz correspondant à des pourcentages identiques de la limite inférieure d'explosibilité.

## Revendications

1. Procédé d'analyse d'un mélange gazeux contenant au moins un gaz inflammable, pour la détermination de son explosibilité, comprenant les étapes consistant à :

   - alimenter un élément résistif chauffant (15) disposé dans une enceinte d'analyse (12) en communication avec le mélange gazeux à analyser, de manière à brûler le mélange gazeux dans l'enceinte ;
   - mesurer un signal électrique (S) aux bornes de l'élément résistif (15) au cours de la combustion ; et
   - déterminer l'explosibilité du mélange gazeux à partir d'une comparaison entre des valeurs du signal mesurées au cours d'une phase transitoire de décroissance de la concentration du ou des gaz inflammables dans le mélange gazeux ;

   caractérisé en ce que les mesures effectuées au cours de la phase transitoire sont effectuées à des instants choisis de manière à obtenir, pour différents gaz inflammables, des signaux de mesure sensiblement identiques pour des concentrations correspondant à des explosibilités identiques.

2. Procédé selon la revendication 1, caractérisé en ce que l'enceinte d'analyse (12) est dotée d'un orifice (22) d'admission du mélange gazeux, l'orifice (22) était calibré de manière à assurer, au cours de la phase transitoire, une diffusion d'une quantité de gaz vers l'enceinte (12) inférieure à la quantité de gaz brûlé dans cette dernière.

3. Procédé selon l'une quelconque des revendications 1 et 2, caractérisé en ce que les mesures sont effectuées à des instants correspondant à des valeurs du signal de mesure comprises entre environ 80% et 40% de la valeur maximale (Ss) du signal électrique aux bornes de l'élément résistif (15).

4. Procédé selon l'une quelconque des revendications 1 à 3, caractérisé en ce que le mélange gazeux comportant plusieurs gaz inflammables ayant des régimes de combustion différents, on procède à un cycle d'analyse dudit mélange pour chaque gaz inflammable, par alimentation de l'élément résistif (15) de manière à le chauffer à la température de combustion du gaz, mesure du signal électrique (S) et détermination de l'explosibilité du mélange gazeux, et l'on additionne le résultat fourni à l'issue de chaque cycle d'analyse.

5. Procédé selon l'une quelconque des revendications 1 à 4, caractérisé en ce que l'enceinte d'analyse (12) est mise en communication avec le mélange gazeux à analyser par l'intermédiaire d'un cloison poreuse (18).

6. Dispositif d'analyse d'un mélange gazeux contenant au moins un gaz inflammable, en vue de la détermination de son explosibilité, pour la mise en oeuvre d'un procédé selon l'une quelconque des revendications 1 à 5, caractérisé en ce qu'il comporte une enceinte d'analyse (12) en communication avec le mélange gazeux à analyser et dotée d'un élément résistif chauffant (15) disposé dans le volume interne de l'enceinte (12), et une unité centrale d'analyse (24) comprenant des moyens d'alimentation (26) de l'élément résistif chauffant (15) de manière à le chauffer jusqu'à la température de combustion du ou de chaque gaz inflammable, et des moyens (28) de calcul de l'explosibilité du mélange gazeux comprenant des moyens de mesure d'un signal électrique aux bornes de l'élément chauffant (15) et des moyens de comparaison entre des valeurs du signal électrique aux bornes de ce dernier, et en ce que l'unité centrale d'analyse (24) comporte des moyens de contrôle du fonctionnement des moyens de mesure de manière à effectuer lesdites mesures, au cours d'une phase transitoire de décroissance de la concentration du ou de chaque gaz inflammable dans le mélange gazeux, à des instants choisis de manière à obtenir, pour différents gaz inflammables, des signaux de mesure (S) sensiblement identiques pour des concentrations correspondant à des explosibilités identiques.

7. Dispositif d'analyse selon la revendication 6, caractérisé en ce que l'enceinte d'analyse (12) est munie d'un orifice (22) d'admission du mélange gazeux, ledit orifice (22) étant calibré de manière à assurer, au cours de la phase transitoire, une diffusion d'une quantité de gaz vers l'enceinte (12) inférieure à la quantité de gaz brûlé dans cette dernière.

8. Dispositif selon la revendication 7, caractérisé en ce que l'enceinte d'analyse comporte une chambre de combustion (14) dans laquelle est disposé l'élément résistif chauffant (15) et une chambre de détente (16) en communication avec le mélange gazeux à analyser par l'intermédiaire d'une cloison poreuse, une paroi de séparation (20) dotée dudit orifice calibré (22) s'étendant entre la chambre de combustion (19) et la chambre de détente (16).

FIG.1

FIG.2

FIG.3

FIG.4

**Office européen des brevets**

## RAPPORT DE RECHERCHE EUROPEENNE

Numéro de la demande

EP 00 40 0330

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | FR 2 537 722 A (CHARBONNAGES DE FRANCE) 15 juin 1984 (1984-06-15) * page 11, ligne 9 - page 14, ligne 17 * | 1,6 | $G01N25/54$ |
| Y | US 5 741 413 A (CAPETANOPOULOS CONSTANTINE DEA) 21 avril 1998 (1998-04-21) * colonne 2, ligne 36 - colonne 3, ligne 10 * | 1,6 | |
| A | US 5 070 721 A (TANTRAM ANTHONY D S) 10 décembre 1991 (1991-12-10) * abrégé; figure 1 * | 1 | |
| A | US 5 709 792 A (ZDANEVITCH ISABELLE ET AL) 20 janvier 1998 (1998-01-20) * abrégé * | 1 | |
| A | WO 91 06849 A (NEOTRONICS LTD) 16 mai 1991 (1991-05-16) * abrégé * | 1 | |

DOMAINES TECHNIQUES RECHERCHES (Int.Cl.7)

$G01N$

Le présent rapport a été établi pour toutes les revendications

| Lieu de la recherche | Date d'achèvement de la recherche | Examinateur |
|---|---|---|
| LA HAYE | 2 juin 2000 | Duchatellier, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 0330

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-06-2000

| Document brevet cité au rapport de recherche | | Date de publication | Membre(s) de la famille de brevet(s) | | Date de publication |
|---|---|---|---|---|---|
| FR 2537722 | A | 15-06-1984 | AT | 29306 T | 15-09-1987 |
| | | | AU | 559224 B | 26-02-1987 |
| | | | AU | 2230483 A | 21-06-1984 |
| | | | CA | 1203022 A | 08-04-1986 |
| | | | DE | 3373351 D | 08-10-1987 |
| | | | EP | 0114009 A | 25-07-1984 |
| | | | ES | 527999 D | 16-01-1985 |
| | | | ES | 8502786 A | 16-04-1985 |
| | | | JP | 59114453 A | 02-07-1984 |
| | | | US | 4538448 A | 03-09-1985 |
| | | | ZA | 8309202 A | 29-08-1984 |
| US 5741413 | A | 21-04-1998 | EP | 0663594 A | 19-07-1995 |
| US 5070721 | A | 10-12-1991 | CA | 2031325 A | 14-06-1991 |
| | | | DE | 69019121 D | 08-06-1995 |
| | | | DE | 69019121 T | 12-10-1995 |
| | | | EP | 0432962 A | 19-06-1991 |
| | | | JP | 3282247 A | 12-12-1991 |
| US 5709792 | A | 20-01-1998 | FR | 2718240 A | 06-10-1995 |
| | | | DE | 69504734 D | 22-10-1998 |
| | | | DE | 69504734 T | 10-06-1999 |
| | | | EP | 0675357 A | 04-10-1995 |
| | | | JP | 8043341 A | 16-02-1996 |
| WO 9106849 | A | 16-05-1991 | DE | 69030320 D | 30-04-1997 |
| | | | DE | 69030320 T | 14-08-1997 |
| | | | EP | 0500598 A | 02-09-1992 |
| | | | JP | 5501917 T | 08-04-1993 |

EPO FORM P0460

Pour tout renseignement concernant cette annexe : voir Journal Officiel de l'Office européen des brevets, No.12/82